# EUROPÄISCHE PATENTSCHRIFT

(11) **EP 1 314 660 B1**
(45) Veröffentlichungstag und Bekanntmachung des Hinweises auf die Patenterteilung: **07.12.2005**
(21) Anmeldenummer: 02021079.5
(22) Anmeldetag: 21.09.2002
(51) Int. Cl.: B65G 1/04, B65G 1/06

(54) **Transporteinrichtung für Paletten**
Transport device for pallets
Dispositif de transport de palettes

(30) Priorität: 22.11.2001 AT 90401 U
(43) Veröffentlichungstag der Anmeldung: 28.05.2003
(73) Patentinhaber: LTW Lagertechnik GmbH, 6961 Wolfurt (AT)
(72) Erfinder: Malin, Peter, 6900 Bregenz (AT); Ulmer, Hanno, 6858 Schwarzach (AT)
(74) Vertreter: Torggler, Paul Norbert

(56) Entgegenhaltungen:
- EP-A- 0 151 742
- DE-A- 2 239 126
- US-A- 6 042 321

## Beschreibung

Die Erfindung bezieht sich auf eine Transporteinrichtung für Paletten mit mehr als zwei, vorzugsweise drei, Stützstreben, mit mindestens einem Fahrzeug mittels dem die Paletten in Transportkanälen mit zwei äußeren Auflageträgern und mindestens einem inneren Auflageträger horizontal verfahrbar und auf den Auflageträgern absetzbar sind, wobei das mindestens eine Fahrzeug zwischen den äußeren Auflageträgern geführt ist und zwei Fahrzeugkomponenten aufweist, die jeweils zwischen zwei Auflageträgern angeordnet und über mindestens einen Verbindungsstrebe miteinander verbunden sind.

Herkömmliche Paletten weisen drei Stützstreben auf und sind beim Shuttletransport auf drei Auflageträgern abgesetzt. Für den horizontalen Transport der Paletten fahren zwei Shuttlefahrzeuge unter die Palette, und zwar jeweils zwischen zwei Auflageträgern und zwei Stützstreben. Für den Transport wird die Palette durch die Shuttlefahrzeuge angehoben, verfahren und anschließend wieder auf die Auflageträger aufgesetzt. Wenn sich die beiden Shuttlefahrzeuge nicht exakt synchron bewegen, kommt es zu einem Verkanten der Palette, was zum Stillstand der Transporteinrichtung führen kann.

Die EP 0 151 742 zeigt eine Transporteinrichtung gemäß dem Oberbegriff des Anspruchs 1 mit einen Transportfahrzeug mit zwei nebeneinander angeordneten Bühren, die über eine Brücke miteinander verbunden sind und die jeweils zwischen einer Außenschiene und einer Mittelschiene ablaufen. Die Bühnen weisen Rollen für die Paletten auf. Wesentlich ist, dass die Überbrückung bzw. Verbindungslasche der beiden Bühnen oberhalb der Mittelschiene verläuft. Die Bühnen müssen zum Übernehmen der Paletten unter die Paletten geschoben werden, wobei die an den Bühnen gelagerten Räder zuerst an den Paletten anstoßen. Dieses System führt dazu, dass die Paletten gestoßen und eventuell verdreht werden.

Aufgabe der Erfindung ist es, eine Transporteinrichtung der oben genannten Art dahingehend zu verbessern, daß sichergestellt ist, daß die transportierten Paletten exakt gerade in der Fahrtrichtung ausgerichtet sind und bleiben.

Diese Aufgabe wird durch die Merkmale des Anspruchs 1 gelöst.

Vorzugsweise ist vorgesehen, daß eine der Fahrzeugkomponenten mindestens einen Motor für den Fahr- und Hubantrieb trägt, und daß eine Transmissionseinrichtung, vorzugsweise eine Transmissionswelle, vorgesehen ist, die den Motor für den Hubantrieb mit der Hebeeinrichtung der zweiten Fahrzeugkomponente verbindet.

Nachfolgend werden verschieden Ausführungsbeispiele der Erfindung anhand der Figuren der beiliegenden Zeichnungen beschrieben.

Die Fig. 1 zeigt einen schematisch gehaltenen Querschnitt durch einen Transportkanal und einen Aufriß einer Palette und zweier Fahrzeuge nach dem Stand der Technik,
die Fig. 2 zeigt einen Querschnitt durch einen Transportkanal einer Ausführungsform der Erfindung mit aufgesetzter Palette und einem unter der Palette befindlichen Fahrzeug in der Bereitschaftsstellung,
die Fig. 3 zeigt einen Querschnitt durch einen Transportkanal, wobei die Palette angehoben und in der Transportstellung gezeigt ist,
die Fig. 4 zeigt eine Stirnansicht eines weiteren Ausführungsbeispieles eines erfindungsgemäßen Fahrzeuges,
die Fig. 5 zeigt ein Schaubild eines Fahrzeuges mit aufgesetzter, beladener Palette,
die Fig. 6 bis 13 zeigen schematische Seitenansichten verschiedener Ausführungsbeispiele eines mittleren Auflageträgers teilweise mit darauf aufgesetzter Palette,
die Fig. 14, 15 und 16 zeigen Querschnitte durch verschiedene Ausführungsbeispiele eines Auflageträgers gemäß der Fig. 13 und
die Fig. 17 bis 25 zeigen schematische Seitenansichten weiterer Ausführungsbeispiele eines mittleren Auflageträgers mit darauf aufgesetzter Palette.

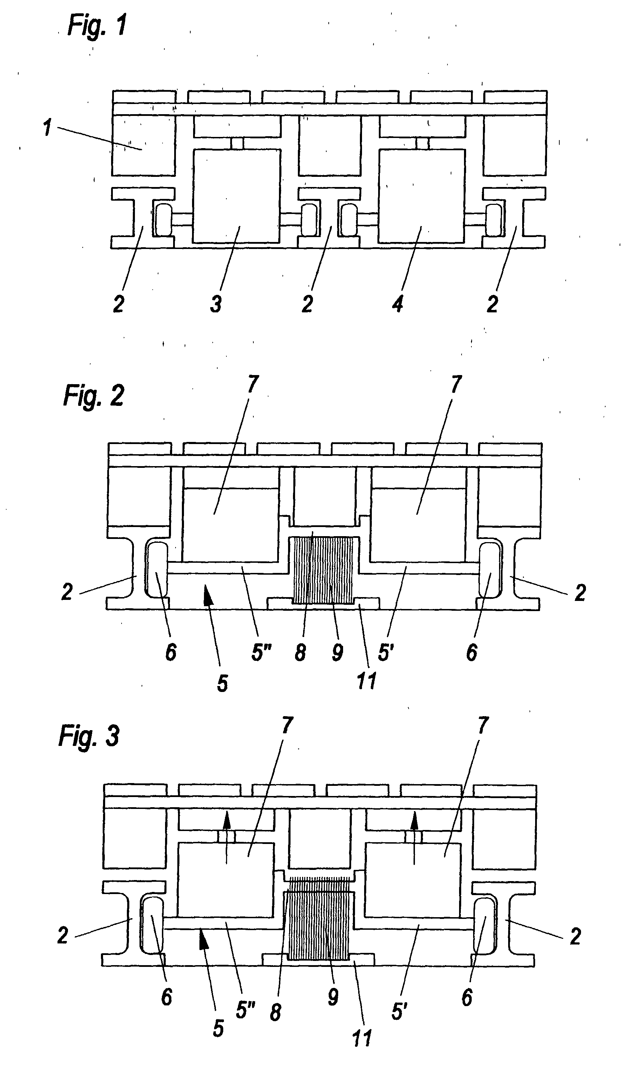

Die Fig. 1 zeigt einen Transportkanal für eine Palette 1 gemäß dem Stand der Technik. Der Transportkanal wird von drei Auflageträgern 2 gebildet, auf denen die Palette 1 in Ruhestellung abgestützt ist. Für den Transport der Palette 1 fahren zwei Transportfahrzeuge 3, 4, die in den Auflageträgern 2 geführt sind unter die Palette 1. Die Auflageträger 2 sind beispielsweise mit Doppel T-Profilen ausgeführt.

Für den Transport der Palette 1 wird diese von den Fahrzeugen 3, 4 angehoben und horizontal verfahren. Dazu bedarf es einer komplizierten elektronischen Steuerung, damit die Fahrzeuge 3, 4 sich mit exakt gleicher Geschwindigkeit nebeneinander bewegen, da es ansonsten zu einem Verkanten der Palette 1 kommt.

Die Fig.2 und 3 zeigen eine Ausführungsform der Erfindung. Es sind zwei äußere Auflageträger 2 vorgesehen, die wie beim Stand der Technik von einem Stahlprofil, beispielsweise von einem U-, C- oder Doppel T- Profil gebildet werden. In diesen Auflageträgern 2 ist das Fahrzeug 5 mit Rädern 6 geführt. Das Fahrzeug 5 weist eine rechte Fahrzeugkomponente 5' und eine linke Fahrzeugkomponente 5" auf. Beide Fahrzeugkomponenten 5', 5" sind mit ,Hebeeinrichtungen 7 für die Palette 1 versehen.

Die beiden Fahrzeugkomponenten 5', 5" sind durch eine oder mehrere Streben 8 starr miteinander verbunden.

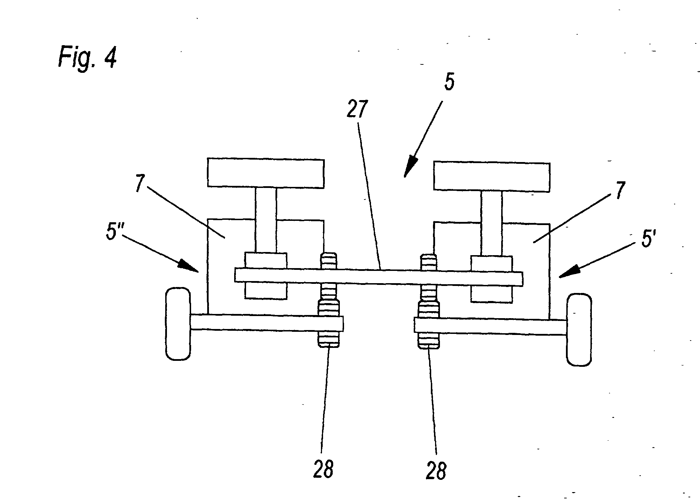

Im Ausführungsbeispiel nach der Fig. 4 ist nur die Fahrzeugkomponente 5" mit einem Motor für den Fahr- und Hubantrieb versehen. Eine Transmissionswelle 27 verbindet den Motor mit der Hebeeinrichtung 7 der Fahrzeugkomponente 5'. Über Kettenantriebe oder Zahnräder 28 erfolgt der Antrieb der Räder 6.

Der mittlere Auflageträger 9 ist derart ausgeführt, daß er zwar vertikal belastbar ist, daß er jedoch von der Strebe 8 in horizontaler Richtung durchfahren werden kann.

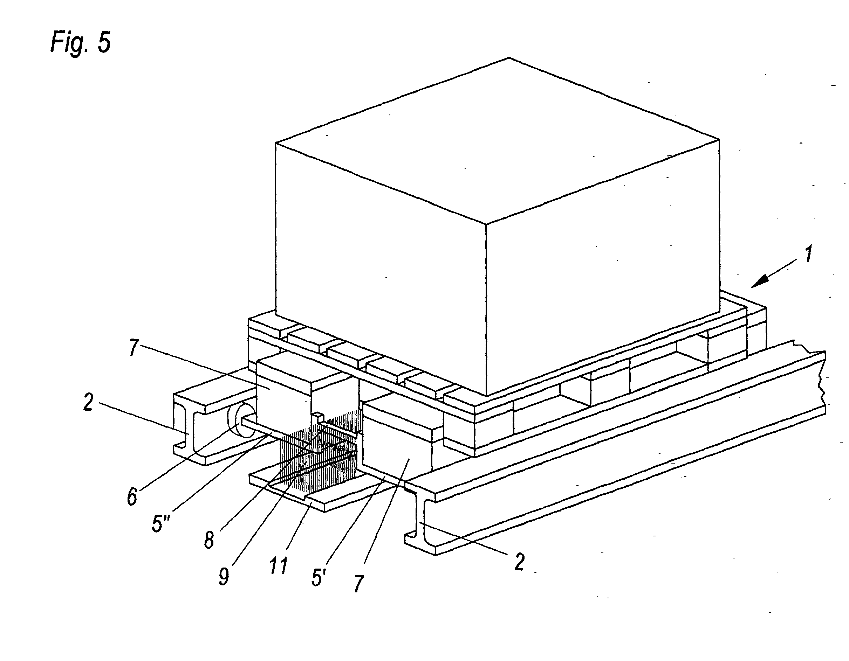

Im Ausführungsbeispiel nach den Fig. 5 bis 7 wird der mittlere Auflageträger 9 von einem streifenförmigen Borstenbesatz gebildet. Die Borsten 10 des Borstenbesatzes sind vertikal belastbar, sodaß sie das Gewicht der Palette 1 und der darauf angeordneten Ware aufnehmen können. Die Borsten 10 können jedoch bei der Durchfahrt der Strebe 8 in der Fahrtrichtung verbogen werden, sodaß die Strebe 8 passieren kann, während sich die Borsten 10 hinter der Strebe 8 wieder aufrichten.

Als Borsten 10 kommen Naturborsten zum Einsatz, aber auch Borsten 10 aus einem Kunststoffmaterial wie z.B. Nylon oder aus einem Metall.

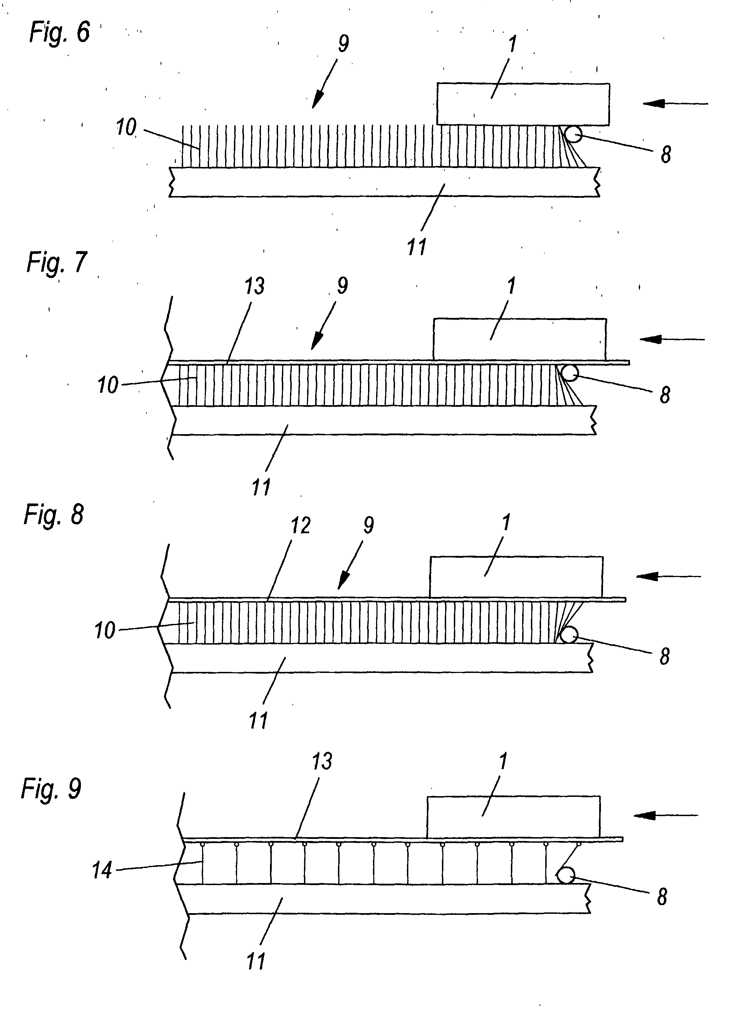

Im Ausführungsbeispiel nach den Fig. 5 und 6 sind die Borsten 10 am Boden 11 befestigt und stützen die Palette 1 direkt ab. Im Ausführungsbeispiel nach der Fig. 8 sind die Borsten 10 an ihren oberen Enden an einem Auflagestreifen 12 befestigt und stützen sich mit ihren unteren Enden lose am Boden 11 ab.

Im Ausführungsbeispiel nach der Fig. 7 sind die Borsten 10 ebenso am Boden 11 befestigt. Zwischen den Borsten 10 und der Palette 1 ist jedoch eine Zwischenauflage in der Form eines Auflagestreifens 13 angeordnet.

Im Ausführungsbeispiel nach der Fig. 9 ist der Auflagestreifen 13 mit nach unten ragenden Pendeln 14 versehen. Wird das Fahrzeug 5 bewegt, kann die Strebe 8, wie aus der Fig. 9 ersichtlich, unter den Pendeln 14 hindurchfahren, wobei diese in Fahrtrichtung ausweichen, um sich nach dem Passieren der Strebe 8 wieder am Boden 11 abzustützen.

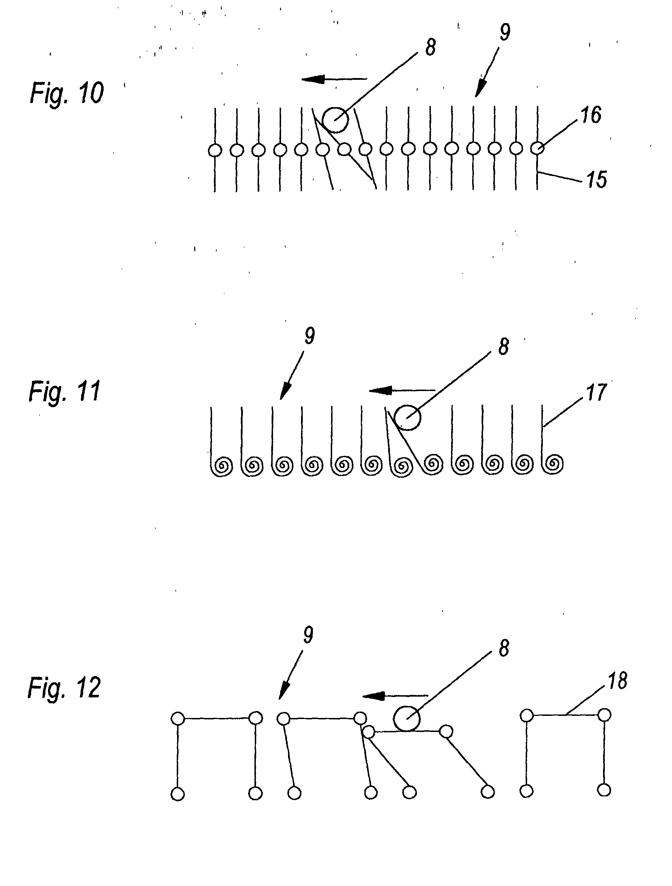

Im Ausführungsbeispiel nach der Fig. 10 wird der mittlere Auflageträger 9 on einer Reihe von Pendeln 15 gebildet, die jeweils um eine mittlere Achse 16 kippbar sind, wiederum kann der Auflageträger 9 von der Strebe 8 in horizontaler Richtung durchfahren werden. Die Pendel 14 weichen, wie in der Fig. 10 schematisch dargestellt, der Strebe 8 aus, um sich hinter dieser wieder aufzurichten.

Im Ausführungsbeispiel nach der Fig. 11 wird der mittlere Auflageträger 9 von einer Reihe von nach oben abstehenden Stahlfedern 17 gebildet. Die Funktion ist die selbe wie bei dem zuvor beschriebenen Ausführungsbeispielen.

Im Ausführungsbeispiel nach der Fig. 12 wird der mittlere Auflageträger 9 von federnden Gelenken 18 gebildet, die ebenso der Strebe 8 des Fahrzeuges 5 ausweichen können, um sich hinter dieser wieder empor zu richten.

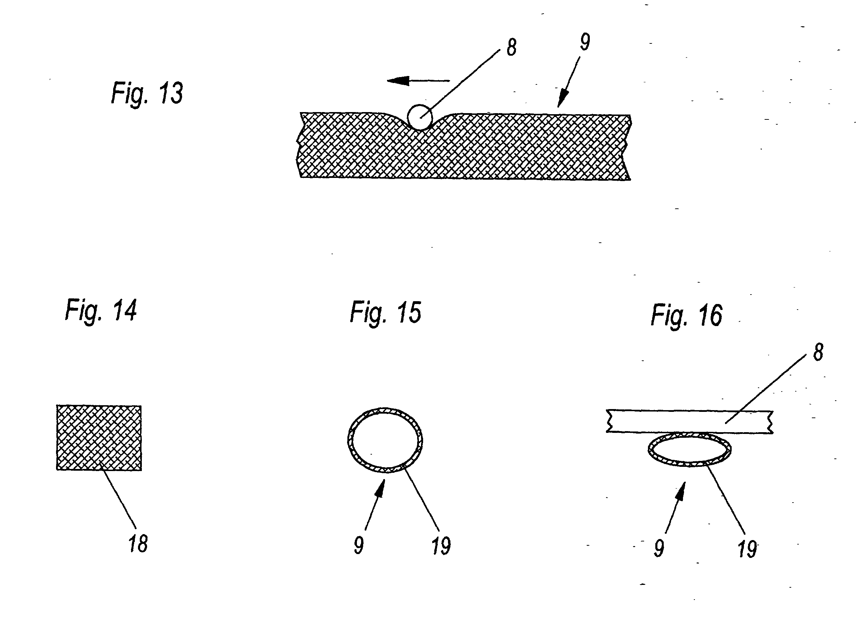

Im Ausführungsbeispiel nach den Fig. 13 bis 16 wird der mittlere Auflageträger 9 von einem elastischen Band gebildet. Dieses elastische Band kann, wie in der Fig. 14 gezeigt, als Vollkörper 18 ausgebildet sein oder, wie in den Fig. 15 und 16 gezeigt, als Schlauch 19. Beim Passieren der Strebe 8 wird der Schlauch 19 oder das Band 18, wie in der Fig. 13 gezeigt, lokal zusammengedrückt, um sich nach dem Passieren der Strebe 8 wieder auszudehnen.

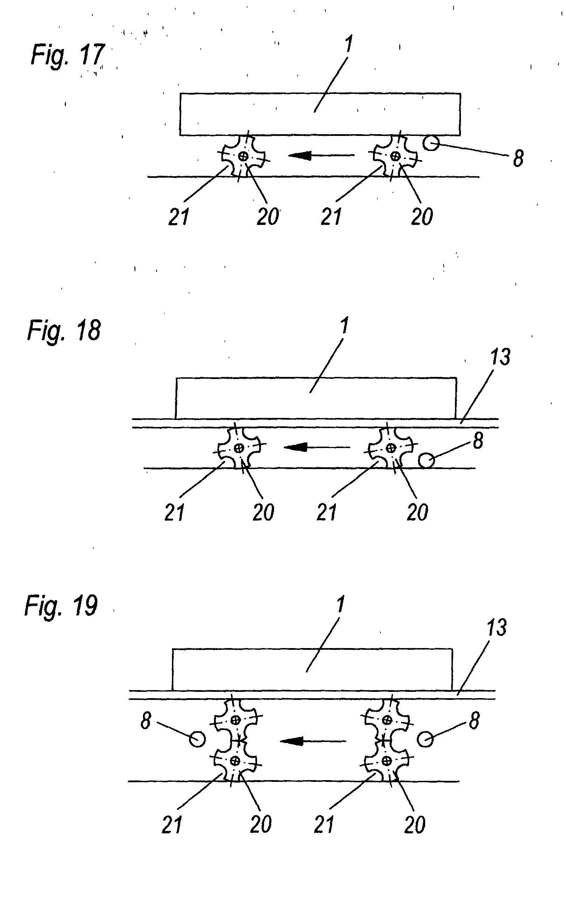

Im Ausführungsbeispiel nach den Fig. 17 bis 19 wird der mittlere Auflageträger 9 von einer Reihe von Zahnrädern 20 gebildet. Die Zahnräder 20 stützen entweder die Palette 1 unmittelbar ab, oder einen Auflagestreifen 13, auf den die Palette 1 aufliegt. Beim Verfahren des Fahrzeuges 5 rastet die Strebe 8 in einer Aussparung 21 des jeweiligen Zahnrades 20 ein und dreht das Zahnrad 20 je nach Fahrtrichtung im Uhrzeigersinn oder im Gegenuhrzeigersinn.

Im Ausführungsbeispiel nach der Fig. 19 sind Zahnradpaare vorgesehen, die von jeweils zwei übereinander angeordneten Zahnrädern 20 gebildet werden. Die Strebe 8, die vorzugsweise als Rundstab ausgebildet ist, kann jeweils in zueinander gegenüberliegenden Aussparungen 21 der Zahnräder 20 einrasten und zwischen den übereinander angeordneten Zahnrädern 20 hindurch geführt werden.

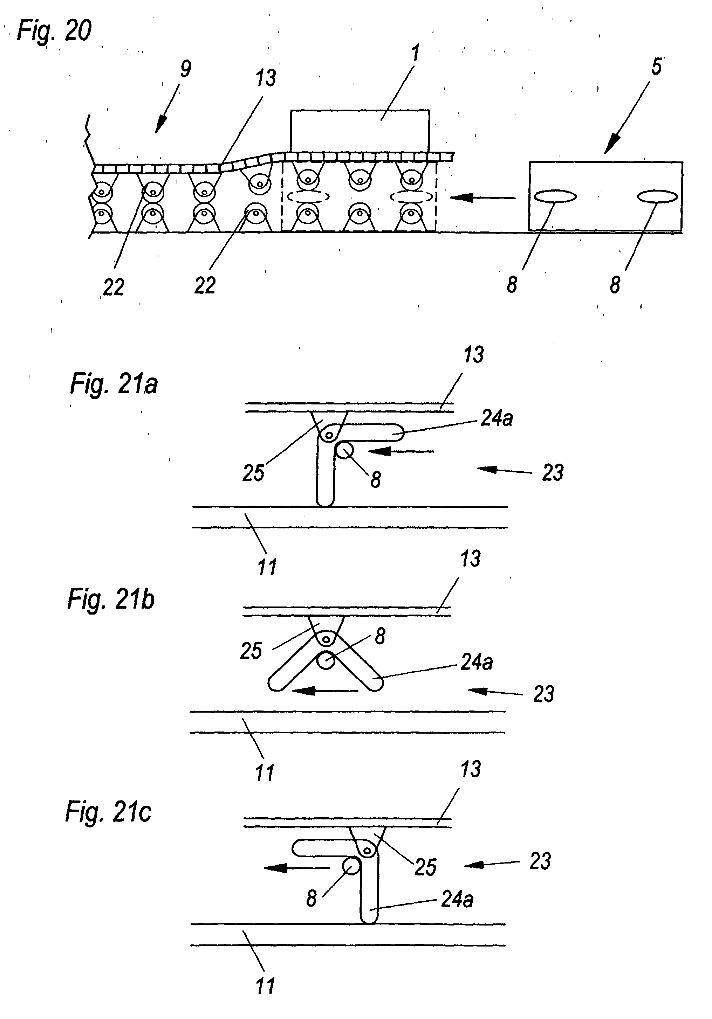

Im Ausführungsbeispiel nach der Fig. 20 sind anstelle der Zahnräder 20 Walzen 22 vorgesehen. Die Strebe 8 ist linsen- oder doppelkeilförmig ausgeführt. Beim Transport der Palette 1 bzw. beim Verfahren des Fahrzeuges 5'wird die Strebe 8 zwischen den übereinander angeordneten Walzen 22 hindurch gedrückt, wobei der Auflagestreifen 13 angehoben wird.

Im Ausführungsbeispiel nach den Fig. 21 a, b und c sind am Auflagestreifen 13 kippbare winkelförmige Stützen 23 mit gleich langen Schenkeln 24 gelagert. Die winkelförmigen Stützen 23 sind an ihrem Scheitelpunkt über Laschen 25 mit dem Auflagestreifen 13 verbunden. Einer der Schenkel 24 ist horizontal ausgerichtet, während sich der andere Schenkel 24 am Boden 11 abstützt. Bei der Fahrt des Fahrzeuges 5 trifft die Strebe 8 auf dem vertikalen Schenkel 24 und kippt die winkelförmige Stütze 23 um ihre Lagerstelle an der Lasche 25. Beim Passieren drückt die Strebe 8 den zuvor vertikal ausgerichteten Schenkel 24 nach oben und der zuvor horizontal ausgerichtete Schenkel 24 stützt sich, wie aus der Fig. 21 c ersichtlich, am Boden 11 ab.

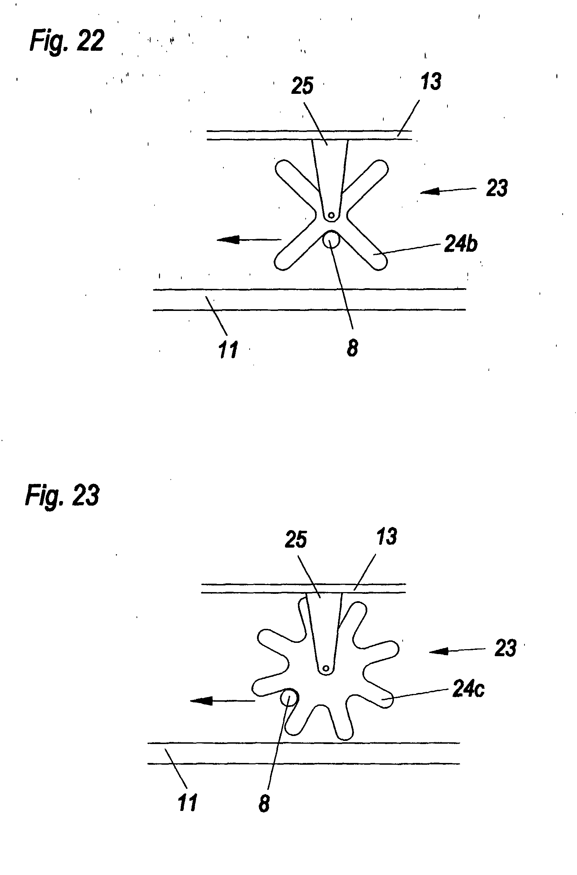

Anstelle von winkelförmigen Stützen 23 können auch kreuzförmige Stützen 23 (Fig. 22) oder sternförmige Stützen 23 (Fig. 23) vorgesehen sein.

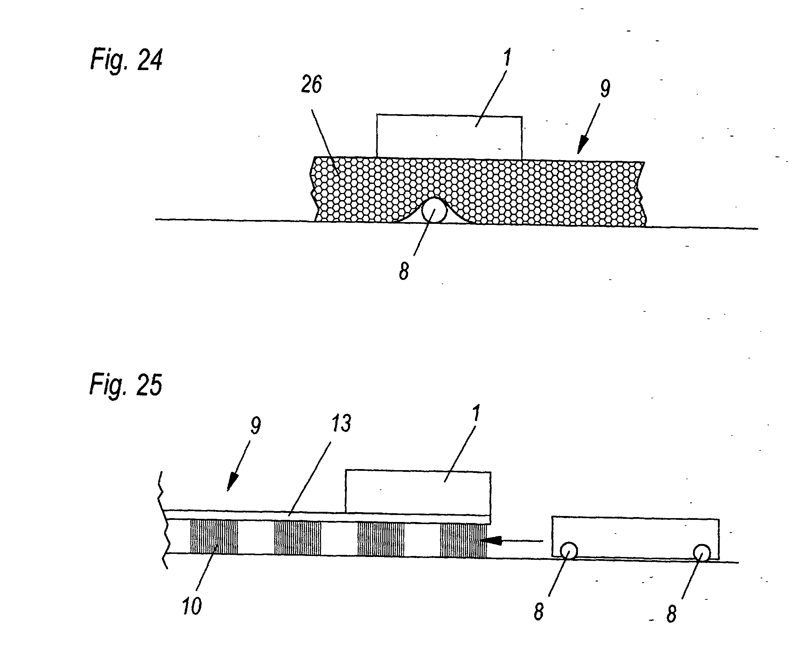

Im Ausführungsbeispiel nach der Fig. 24 wird der mittlere Auflageträger von einem Laminatband 26 gebildet, das der Strebe 8 ausweichen kann.

Die Fig. 25 zeigt ein Ausführungsbeispiel, wobei die Borsten 10 gruppenweise am Auflagestreifen 13 befestigt sind. Die Anzahl und die Länge der Gruppen wird vom Gewicht der zu transportierenden Ware bestimmt.

## Patentansprüche

1. Transporteinrichtung für Paletten (1) mit mehr als zwei, vorzugsweise drei, Stützstreben, mit mindestens einem Fahrzeug (5) mittels dem die Paletten (1) in Transportkanälen mit zwei äußeren Auflageträgern (2) und mindestens einem inneren Auflageträger (9) horizontal verfahrbar und auf den Auflageträgern (2, 9) absetzbar sind, wobei das mindestens eine Fahrzeug (5) zwischen den äußeren Auflageträgern (2) geführt ist und zwei Fahrzeugkomponenten (5', 5") aufweist, die jeweils zwischen zwei Auflageträgern (2, 9) angeordnet und über mindestens eine Verbindungsstrebe (8) miteinander verbunden sind, wobei die Fahrzeugkomponenten (5', 5") mit Hebeeinrichtungen (7) zum Anheben der Paletten (1) versehen sind und der mindestens eine mittlere Auflageträger (9) die Paletten (1) in vertikaler Richtung abstützt, **dadurch gekennzeichnet, daß** der mindestens eine mittlere Auflageträger (9) den horizontalen Durchtritt (5) der mindestens einen Verbindungsstrebe (8) in der Fahrtrichtung des Fahrzeuges durch den mindestens einen mittleren Auflageträger (9) hindurch gestattet.

2. Transporteinrichtung nach Anspruch 1, **dadurch gekennzeichnet, daß** der mindestens eine mittlere Auflageträger (9) von einem streifenförmigen Borstenbesatz gebildet wird.

3. Transporteinrichtung nach Anspruch 2, **dadurch gekennzeichnet, daß** die Borsten (10) aus Naturborsten gefertigt sind.

4. Transporteinrichtung nach Anspruch 2, **dadurch gekennzeichnet, daß** die Borsten (10) aus einem Kunststoffmaterial, beispielsweise Nylon, gefertigt sind.

5. Transporteinrichtung nach Anspruch 2, **dadurch gekennzeichnet, daß** die Borsten (10) aus einem Metall gefertigt sind.

6. Transporteinrichtung nach einem der Ansprüche 2 bis 5, **dadurch gekennzeichnet, daß** die Borsten (10) an ihren unteren Enden an einer Basis befestigt sind.

7. Transporteinrichtung nach einem der Ansprüche 2 bis 5, **dadurch gekennzeichnet, daß** die Borsten (10) an ihren oberen Enden an einem Auflagestreifen (13) für die Paletten (1) befestigt sind.

8. Transporteinrichtung nach Anspruch 1, **dadurch gekennzeichnet, daß** der mindestens eine mittlere Auflageträger (9) von einer an einem Auflagestreifen (13) für die Palette (1) befestigten Pendelreihe gebildet wird (Fig. 9).

9. Transporteinrichtung nach Anspruch 1, **dadurch gekennzeichnet, daß** der mindestens eine innere Auflageträger (9) von in Reihe angeordneten Zahnrädern (20) gebildet wird.

10. Transporteinrichtung nach Anspruch 9, **dadurch gekennzeichnet, daß** in Reihe angeordnete Zahnradpaare mit übereinander angeordneten Zahnrädern (20) vorgesehen sind, wobei die unteren Zahnräder (20) die oberen Zahnräder (20) abstützen, die Zahnräder (20) eines Zahnradpaares jedoch nicht miteinander kämmen.

11. Transporteinrichtung nach Anspruch 1, **dadurch gekennzeichnet, daß** der mindestens eine innere Auflageträger (9) von in Reihe angeordneten Walzen- oder Rollenpaaren gebildet wird, wobei die Walzen bzw. Rollen (22) eines Paares übereinander angeordnet sind, die unteren Rollen (22) die oberen Rollen (22) abstützen und die oberen Walzen oder Rollen (22) an einem anhebbaren Auflagestreifen (13) für die Paletten (1) gelagert sind.

12. Transporteinrichtung nach Anspruch 1, **dadurch gekennzeichnet, daß** der mindestens eine innere Auflageträger (9) von einem Auflagestreifen (13) gebildet wird, der von in Reihe angeordneten kippbaren winkelförmigen Stützen (23) abgestützt wird (Fig. 21 a, b, c).

13. Transporteinrichtung nach Anspruch 12, **dadurch gekennzeichnet, daß** die Winkelstütze (23) gleich lange Schenkel (24) aufweisen und am Scheitelpunkt an dem Auflagestreifen (13) gelagert sind.

14. Transporteinrichtung nach Anspruch 1, **dadurch gekennzeichnet, daß** der mindestens eine innere Auflageträger (9) von einem Auflagestreifen (13) gebildet wird, der von kreuz- oder sternförmigen Stützen (23) abgestützt wird (Fig. 22, 23).

15. Transporteinrichtung nach einem der Ansprüche 1 bis 14, **dadurch gekennzeichnet, daß** auf den Borsten (10) eine Zwischenauflage in der Form eines separaten Auflagestreifens (13) aufliegt.

16. Transporteinrichtung nach einem der Ansprüche 2 bis 7, **dadurch gekennzeichnet, daß** die Borsten (10) in Borstengruppen angeordnet sind (Fig. 25).

17. Transporteinrichtung nach Anspruch 1, **dadurch gekennzeichnet, daß** der mindestens eine mittlere Auflageträger (9) von einem Laminatband (26) gebildet wird.

18. Transporteinrichtung nach Anspruch 1, **dadurch gekennzeichnet, daß** der mindestens eine mittlere Auflageträger (9) von einem mit einem Fluid gefüllten Schlauch (19) gebildet wird.

19. Transporteinrichtung nach Anspruch 1, **dadurch gekennzeichnet, daß** der mindestens eine mittlere Auflageträger (9) von einem elastisch verformbaren Material gebildet wird.

20. Transporteinrichtung nach Anspruch 19, **dadurch gekennzeichnet, daß** der mindestens eine mittlere Auflageträger (9) zumindestens teilweise von einem Gummimaterial gebildet wird.

21. Transporteinrichtung nach einem der Ansprüche 1 bis 20, **dadurch gekennzeichnet, daß** eine der Fahrzeugkomponenten (5', 5") mindestens einen Motor für den Fahr- und Hubantrieb trägt, und daß eine Transmissionseinrichtung, vorzugsweise eine Transmissionswelle (27), vorgesehen ist, die den Motor für den Hubantrieb mit der Hebeeinrichtung (7) und/oder einem Rad (6) der zweiten Fahrzeugkomponente (5', 5") verbindet.

## Claims

1. A transport apparatus for pallets (1) with more than two, preferably three, support bars, with at least one vehicle (5) by means of which the pallets (1) are horizontally displaceable in transport ducts with two outer support carriers (2) and at least one inner support carrier (9) and can be set down on the support carriers (2, 9), wherein the at least one vehicle (5) is guided between the outer support carriers (2) and comprises two vehicle components (5', 5") which are respectively arranged between two support carriers (2, 9) and are connected together by way of at least one connecting bar (8), wherein the vehicle components (5', 5") are provided with lifting devices (7) for lifting the pallets (1) and the at least one central support carrier (9) supports the pallets (1) in a vertical direction, **characterised in that** the at least one central support carrier (9) allows the horizontal through-passage of the at least one connecting bar (8) in the direction of travel of the vehicle (5) through the at least one central support carrier (9).

2. A transport apparatus according to claim 1 **characterised in that** the at least one central support carrier (9) is formed by a strip-shaped bristle array.

3. A transport apparatus according to claim 2 **characterised in that** the bristles (10) are made from natural bristles.

4. A transport apparatus according to claim 2 **characterised in that** the bristles (10) are made from a plastic material, for example nylon.

5. A transport apparatus according to claim 2 **characterised in that** the bristles (10) are made from a metal.

6. A transport apparatus according to one of claims 2 to 5 **characterised in that** the bristles (10) are fixed at their lower ends to a base.

7. A transport apparatus according to one of claims 2 to 5 **characterised in that** the bristles (10) are fixed at their upper ends to a support strip (12) for the pallets (1).

8. A transport apparatus according to claim 1 **characterised in that** the at least one central support carrier (9) is formed by a pendulum row fixed to a support strip (13) for the pallet (1) (Figure 9).

9. A transport apparatus according to claim 1 **characterised in that** the at least one inner support carrier (9) is formed by gears (20) arranged in a row.

10. A transport apparatus according to claim 9 **characterised in that** there are provided pairs of gears arranged in a row, with mutually superposed gears (20), wherein the lower gears (20) support the upper gears (20) but the gears (20) of a pair of gears do not mesh with each other.

11. A transport apparatus according to claim 1 **characterised in that** the at least one inner support carrier (9) is formed by pairs of rolls or rollers in a row, wherein the rolls or rollers (22) of a pair are arranged in mutually superposed relationship, the lower rolls (22) support the upper rolls (22) and the upper rollers or rolls (22) are mounted on a liftable support strip (13) for the pallets (1).

12. A transport apparatus according to claim 1 **characterised in that** the at least one inner support carrier (9) is formed by a support strip (13) which is supported by tiltable angular support members (23) arranged in a row (Figures 21 a, b, c).

13. A transport apparatus according to claim 12 **characterised in that** the angular support members (23) have limbs (24) of equal length and are mounted at the apex point on the support strip (13).

14. A transport apparatus according to claim 1 **characterised in that** the at least one inner support carrier (9) is formed by a support strip (13) which is supported by support members (23) of a cross or star configuration (Figures 22, 23).

15. A transport apparatus according to one of claims 1 to 14 **characterised in that** resting on the bristles (10) is an intermediate support means in the form of a separate support strip (13).

16. A transport apparatus according to one of claims 2 to 7 **characterised in that** the bristles (10) are arranged in groups of bristles (Figure 25).

17. A transport apparatus according to claim 1 **characterised in that** the at least one central support carrier (9) is formed by a laminate band (26).

18. A transport apparatus according to claim 1 **characterised in that** the at least one central support carrier (9) is formed by a tube (19) filled with a fluid.

19. A transport apparatus according to claim 1 **characterised in that** the at least one central support carrier (9) is formed by an elastically deformable material.

20. A transport apparatus according to claim 1 **characterised in that** the at least one central support carrier (9) is formed at least partially by a rubber material.

21. A transport apparatus according to one of claims 1 to 20 **characterised in that** one of the vehicle components (5', 5") carries at least one motor for the travel and lifting drive and that there is provided a transmission arrangement, preferably a transmission shaft (27), which connects the motor for the lifting drive to the lifting device (7) and/or a wheel (6) of the second vehicle component (5', 5").

## Revendications

1. Dispositif de transport pour palettes (1) comportant plus de deux, de préférence trois, traverses de support, comportant au moins un véhicule (5), au moyen duquel les palettes (1) sont transportables horizontalement avec deux éléments de support extérieurs (2) et au moins un élément de support intérieur (9) dans des couloirs de transport et peuvent être déposées sur les éléments de support (2, 9), ledit au moins un véhicule (5) étant guidé entre les éléments de support (2) extérieurs et comportant deux composants de véhicule (5', 5") qui sont agencés chacun entre deux éléments de support (2, 9) et sont reliés l'un à l'autre par au moins une traverse de liaison (8), les composants de véhicule (5', 5'') étant munis de dispositifs élévateurs (7) pour soulever les palettes (1) et ledit au moins un élément de support central (9) formant un appui dans le sens vertical pour les palettes (1), **caractérisé en ce que** ledit au moins un élément de support central (9) permet le passage horizontal de ladite au moins une traverse de liaison (8) dans le sens de déplacement du véhicule (5)au travers de ledit au moins un élément de support central (9).

2. Dispositif de transport pour palettes selon la revendication 1, **caractérisé en ce que** ledit au moins un élément de support central (9) est formé par une bordure en poils de brosse en forme de bande.

3. Dispositif de transport pour palettes selon la revendication 2, **caractérisé en ce que** les poils (10) de la bordure en poils de brosse sont réalisés en poils naturels.

4. Dispositif de transport selon la revendication 2, **caractérisé en ce que** les poils (10) de la bordure en poils de brosse sont réalisés dans une matière plastique, telle que le nylon.

5. Dispositif de transport selon la revendication 2, **caractérisé en ce que** les poils (10) de la bordure en poils de brosse sont réalisés en métal.

6. Dispositif de transport selon l'une quelconque des revendications 2 à 5, **caractérisé en ce que** les poils (10) de la bordure en poils de brosse sont fixés par leurs extrémités inférieures contre une base.

7. Dispositif de transport selon l'une quelconque des revendications 2 à 5, **caractérisé en ce que** les poils (10) de la bordure en poils de brosse sont fixés par leurs extrémités supérieures contre une bande de chargement (13) pour les palettes (1).

8. Dispositif de transport selon la revendication 1, **caractérisé en ce que** ledit au moins un élément de support central (9) est formé par une rangée d'éléments suspendus, fixés contre une bande de chargement (13) pour les palettes (1)(fig. 9).

9. Dispositif de transport selon la revendication 1, **caractérisé en ce que** ledit au moins un élément de support intérieur (9) est formé par des roues dentées (20) disposées en rangs.

10. Dispositif de transport selon la revendication 9, **caractérisé en ce qu'**il est prévu des paires de roues dentées disposées en rangs et comportant des roues dentées (20) superposées, les roues dentées (20) inférieures formant appui pour les roues dentées (20) supérieures, néanmoins les roues dentées (20) d'une paire de roues dentées ne s'engrénant pas l'une dans l'autre.

11. Dispositif de transport pour palettes selon la revendication 1, **caractérisé en ce que** ledit au moins un élément de support intérieur (9) est formé par des paires de cylindres ou rouleaux disposées en rangs, les cylindres ou rouleaux (22) d'une paire étant superposés, les rouleaux (22) inférieurs formant appui pour les rouleaux (22) supérieurs et les cylindres ou rouleaux (22) supérieurs étant fixés contre une bande de chargement (13), apte à être soulevée et destinée à recevoir les palettes (1).

12. Dispositif de transport pour palettes selon la revendication 1, **caractérisé en ce que** ledit au moins un élément de support intérieur (9) est formé par une bande de chargement (13) qui vient en appui sur des supports (23) en forme de cornière, articulés, disposés en rangs (fig. 21a, b, c).

13. Dispositif de transport selon la revendication 12, **caractérisé en ce que** les supports (23) en forme de cornière ont des branches (24) de même longueur et sont montés par leur sommet contre la bande de chargement (13).

14. Dispositif de transport pour palettes selon la revendication 1, **caractérisé en ce que** ledit au moins un élément de support intérieur (9) est formé par une bande de chargement (13) qui vient en appui sur des supports (23) en forme de croix ou d'étoiles (Fig. 22, 23).

15. Dispositif de transport selon l'une quelconque des revendications 1 à 14, **caractérisé en ce qu'**un support intermédiaire, ayant la forme d'une bande de chargement (13) séparée, est en appui sur les poils de brosse (10).

16. Dispositif de transport selon l'une quelconque des revendications 2 à 7, **caractérisé en ce que** les poils (10) de la bordure en poils de brosse sont agencés par groupes de poils (fig. 25).

17. Dispositif de transport selon la revendication 1, **caractérisé en ce que** ledit au moins un élément de support central (9) est formé par une bande stratifiée (26).

18. Dispositif de transport selon la revendication 1, **caractérisé en ce que** ledit au moins un élément de support central (9) est formé par un tuyau flexible (19) rempli d'un fluide.

19. Dispositif de transport selon la revendication 1, **caractérisé en ce que** ledit au moins un élément de support central (9) est formé par un matériau élastiquement déformable.

20. Dispositif de transport selon la revendication 19, **caractérisé en ce que** ledit au moins un élément de support central (9) est formé au moins en partie, par un matériau en caoutchouc.

21. Dispositif de transport selon l'une quelconque des revendications 1 à 20, **caractérisé en ce que** l'un des composants (5', 5'') du véhicule porte au moins un moteur pour l'entraînement du mouvement de transport et du mouvement de levage, et **en ce qu'**il est prévu un dispositif de transmission, de préférence un arbre de transmission (27), par lequel le moteur d'entraînement du mouvement de levage est relié au dispositif de levage (7) et/ou à une roue (6) du deuxième composant (5', 5'') du véhicule.
